# FASCICULE DE BREVET EUROPEEN

(11) **EP 1 724 720 B1**
(45) Date de publication et mention de la délivrance du brevet: **16.05.2012**
(21) Numéro de dépôt: 06114139.6
(22) Date de dépôt: 18.05.2006
(51) Int. Cl.: G07B 17/00, G06Q 20/00

(54) **Procédé de paiement de service d'affranchissement dans une machine de traitement de courrier en libre accès**
Zahlungsverfahren für den Frankierdienst in einer Maschine zur Verarbeitung von Post mit Direktzugriff
Payment procedure for a franking service in a freely accessible mail handling machine

(30) Priorité: 20.05.2005 FR 0505097
(43) Date de publication de la demande: 22.11.2006
(73) Titulaire: NEOPOST TECHNOLOGIES, 92220 Bagneux (FR)
(72) Inventeur: CHATTE, Fabien, 94130, NOGENT SUR MARNE (FR); DIOT, Lionel, 92160, ANTONY (FR); RAMIREZ, David, 94170, LE PERREUX SUR MARNE (FR)
(74) Mandataire: David, Alain

(56) Documents cités:
- EP-A- 1 160 744
- EP-A2- 0 986 028
- DE-A1- 10 133 887
- DE-A1- 19 940 448
- GB-A- 2 387 259

## Description

### Domaine de la technique

La présente invention se rapporte exclusivement au domaine du traitement de courrier et elle concerne plus particulièrement un procédé pour assurer un paiement de service d'affranchissement dans une machine de traitement de courrier en libre accès en lieu et place des paiements traditionnels en monnaie ou par carte.

### Etat de la technique

Aujourd'hui, lorsque l'on souhaite utiliser une machine de traitement de courrier en libre accès dans un espace public, il est nécessaire de disposer soit de pièces de monnaie soit d'une carte pré-chargée soit encore d'une carte bancaire de paiement ou de crédit. La première des solutions est exposée au vandalisme de certains usagers et tend donc à disparaître des espaces publics alors que la seconde suppose d'être en possession d'une carte valide avec une recharge monétaire suffisante ce qui peut poser une difficulté en cas d'utilisation de la machine de traitement de courrier en dehors des heures d'ouverture du service public dont elle dépend. Quant à la dernière solution, elle oblige la saisie d'un code confidentiel ce qui peut être gênant dans un espace public. De plus, l'intégration d'un lecteur de carte bancaire dans la machine de traitement de courrier en renchérit notablement les coûts de fabrication comme d'exploitation.

Document EP 1 160 744 décrit un procédé d'utilisation d'un terminal à libre service (self service terminal - SST). Un utilisateur muni d'un dispositif de communication portable, tel qu'un téléphone mobile, qui désire utiliser le terminal, envoie à un serveur distant de contrôle une requête à l'exécution d'une transaction. Dans le message transmis, sont inclus des données identifiant l'utilisateur, son dispositif de communication et un code d'identification du terminal. Le message est chiffré par la clef publique du serveur distant. Le serveur distant, ayant reçu les données transmises, il les déchiffre utilisant la clef privée et identifie l'utilisateur, son dispositif et le terminal. Il génère un code d'autorisation basé aux données de l'utilisateur, du dispositif et de la transaction reçues, le chiffre et le renvoie au dispositif de communication de l'utilisateur. L'utilisateur introduit le code d'autorisation chiffré dans le terminal, où il est déchiffré en utilisant la clef publique du serveur distant et vérifié. La vérification réussie, le terminal permet à l'utilisateur d'effectuer sa transaction.

Il existe donc un besoin, aujourd'hui non satisfait, pour un procédé de paiement alternatif qui évite les inconvénients précités lors de l'utilisation dans un espace public d'une machine de traitement de courrier en libre accès.

### Divulgation de l'invention

La présente invention a donc pour objet un nouveau procédé de paiement de service d'affranchissement dans une machine de traitement de courrier en libre accès disponible dans un espace public selon la revendication 1.

Selon le mode de réalisation envisagé, l'opération d'envoi de la requête en paiement de service d'affranchissement peut comporter l'envoi d'un message SMS ou l'appel à un serveur vocal.

Avantageusement, de vérification des droits d'accès de l'utilisateur comporte une vérification du numéro de téléphone de l'utilisateur, l'opération de chiffrement du code d'autorisation comporte un chiffrement par une clé privée du système serveur et l'opération de vérification du code chiffré d'autorisation comporte un déchiffrement du code chiffré d'autorisation par une clé publique associée à la clé privée du système serveur.

De préférence, la machine de traitement de courrier transmet périodiquement au système serveur une table de correspondance donnant pour chaque code d'autorisation le montant de la transaction d'affranchissement consommé par l'utilisateur de ce code. Cette table comporte également une date de transaction et un relevé des différents types de service utilisés. La transmission est effectuée au moins une fois par jour.

Avantageusement, en réponse à cette transmission, le système serveur retourne à la machine de traitement de courrier une nouvelle liste de codes d'autorisation et une nouvelle clé publique. Il génère une table d'attribution qui associe au numéro de téléphone d'un utilisateur dont les droits d'accès sont valides un code d'autorisation de la liste des codes d'autorisation correspondant à la machine dont il souhaite avoir accès.

De préférence, la facturation de l'utilisateur est effectuée en associant son numéro de téléphone issu de la table d'attribution avec un montant de la transaction d'affranchissement issu de la table de correspondance, le lien entre ces deux tables étant effectué par leur code d'autorisation commun.

### Brève description des dessins

D'autres caractéristiques et avantages de la présente invention ressortiront mieux de la description suivante, faite à titre indicatif et non limitatif, en regard des dessins annexés, sur lesquels:
- la figure 1 montre un exemple d'architecture de réseau permettant la mise en oeuvre du procédé de paiement de service d'affranchissement selon l'invention, et
- la figure 2 est un organigramme illustrant les différentes étapes du procédé de l'invention, et
- la figure 3 montre un exemple d'organisation de la base de données mise en oeuvre dans le procédé de l'invention.

### Mode(s) de réalisation de l'invention

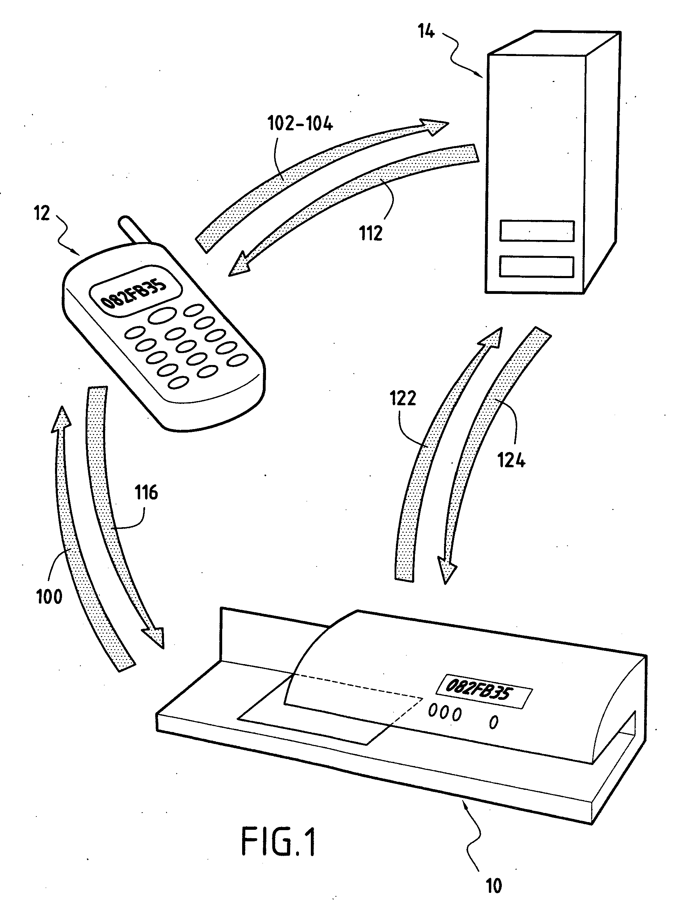

Le principe de l'invention repose sur le remplacement dans les machines à affranchir en libre accès du paiement de service d'affranchissement actuel, en numéraire ou par carte, par un paiement au moyen d'un dispositif de communication portatif. Pour ce faire, et comme l'illustre la figure 1, il est proposé à l'utilisateur d'une machine de traitement de courrier 10 qui souhaite procéder à un affranchissement d'un ou de plusieurs articles de courrier de relever le numéro d'identification de cette machine, de faire appel à un service de paiement de service d'affranchissement et de communiquer ce numéro d'identification, au moyen du dispositif de communication portatif 12 en sa possession, à un système serveur de paiement de service d'affranchissement 14 signalé par un identifiant du service, de recevoir sur le dispositif de communication portatif en réponse à cette communication un code chiffré d'autorisation d'affranchissement, et d'entrer ce code chiffré d'autorisation d'affranchissement dans la machine de traitement de courrier pour valider la ou les services d'affranchissement souhaités, le débit du montant de la transaction d'affranchissement relative au(x) service(s) demandé(s) étant effectué directement sur le compte dont l'utilisateur est titulaire au niveau du service de paiement de service d'affranchissement.

La machine de traitement de courrier 10 est une machine connectée standard disposée dans un espace public et donc en libre accès. Elle peut intégrer ou non un module de pesée et dispose d'une interface utilisateur. Cette interface utilisateur permet la visualisation et la saisie de différentes informations relatives au service d'affranchissement souhaité (numéro d'identification machine, montant de la transaction d'affranchissement, classe de courrier, transporteur utilisé, pays de destination, logo désiré, etc.) affichées par la machine ou entrées par l'utilisateur. Elle comporte donc au moins un écran qui peut alors être tactile ou plus classiquement un afficheur LCD associé à un clavier avec des touches de fonctions.

Le dispositif de communication portatif 12 peut être tout dispositif de traitement de données permettant une communication sans fil au travers d'un réseau de télécommunications sans fil (tel que les réseaux GSM, UMTS, WIMAX, etc.) comme un téléphone mobile ou portable, un assistant numérique personnel communiquant ou encore un ordinateur portable communiquant.

Le système serveur 14 disposé sur un site du concessionnaire de la machine de traitement de courrier ou de l'administration postale comporte une ou plusieurs unités centrales informatiques comprenant une ou plusieurs bases de données et classiquement un ou plusieurs terminaux informatiques (non représentés) pour en assurer le contrôle et la gestion. Il comporte bien entendu les interfaces nécessaires (SMS, vocal, WAP, Internet, etc...) pour permettre les communications avec le dispositif di communication portatif selon les protocoles désirés.

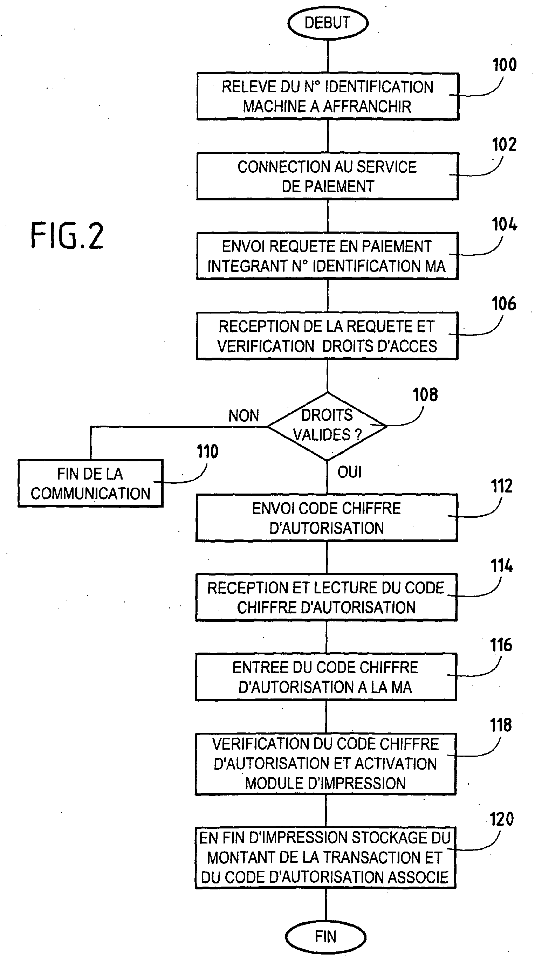

La figure 2 montre un organigramme détaillant les différentes étapes permettant le déblocage de la machine de traitement de courrier afin d'autoriser les opérations d'affranchissement par l'utilisateur (voir aussi la figure 1). Dans une première étape 100, l'utilisateur va relever le numéro d'identification de la machine de traitement de courrier qu'il souhaite utiliser pour le service d'affranchissement demandé. Ce numéro peut être inscrit sur la machine ou, plus simplement, apparaître à son écran de visualisation lors de l'activation de la machine par l'utilisateur. Cette activation peut également faire apparaître à l'écran l'identifiant du service de paiement de service d'affranchissement auquel l'utilisateur, dans une étape 102, doit se connecter pour obtenir une autorisation d'affranchissement. Cet identifiant est par exemple un numéro de téléphone ou un numéro court (mais on peut aussi envisager une adresse WAP ou Internet) que l'utilisateur devra appeler au moyen de son dispositif de communication portatif pour entrer en communication avec le système serveur associé au service de paiement de service d'affranchissement.

Une fois la connexion établie, l'utilisateur adressera au système serveur, dans une étape 104, une requête en paiement de service d'affranchissement comportant le numéro d'identification de la machine de traitement de courrier relevé précédemment, la forme de cette communication dépendant bien entendu du type d'interface utilisée au niveau du système serveur et qui peut être une interface pour serveur vocal interactif, pour serveur de SMS, pour serveur WAP ou Internet ou tout autre serveur adapté.

Dans une nouvelle étape 106, le système serveur va recevoir cette requête et vérifier le droit d'accès au service de l'utilisateur en comparant par exemple son numéro de téléphone avec celui enregistré dans sa base de données client. Cette comparaison peut être faite classiquement sur la base des numéros IMSI ou IMEI du dispositif de communication transmis lors de l'appel. Si cette comparaison (test de l'étape 108) s'avère négative, le système serveur invitera l'utilisateur qu'il n'aura pu identifier à demander une inscription au service par tout mode de communication approprié (à un guichet, par téléphone, par Internet) et la communication sera ensuite interrompue (étape 110). Dans le cas contraire, si les droits d'accès de l'utilisateur sont valides, en réponse à la requête en paiement de service d'affranchissement, le système serveur va générer, à l'étape 112, un code chiffré d'autorisation (par un chiffrement au moyen d'une clé privée du système serveur d'un code d'autorisation extrait d'une liste de codes d'autorisation adressée préalablement à la machine de traitement de courrier concernée) qui est un code unique autosigné à partir notamment du numéro d'identification de la machine de traitement de courrier reçu avec la requête et l'envoyer au dispositif de communication portatif. L'utilisateur n'a plus ensuite, dans une nouvelle étape 114, qu'à lire ce code chiffré d'autorisation reçu sur son dispositif de communication portatif et le saisir, dans une étape suivante 116, au niveau de l'interface utilisateur de la machine de traitement de courrier pour que celle-ci, dans une étape suivante 118, vérifie le code chiffré d'autorisation entré par l'utilisateur, et si ce code est valide, active le module d'impression de la machine de traitement de courrier pour permettre à l'utilisateur de procéder à ses opérations d'affranchissement dont le montant global en fin d'impression sera stocké avec le code d'autorisation correspondant dans la machine de traitement de courrier (étape 120).

L'opération de vérification est assurée par un déchiffrement du code chiffré au moyen d'une clé publique associée à la clé privée du système serveur et par comparaison du résultat obtenu avec une liste de code d'autorisation reçue préalablement du système serveur.

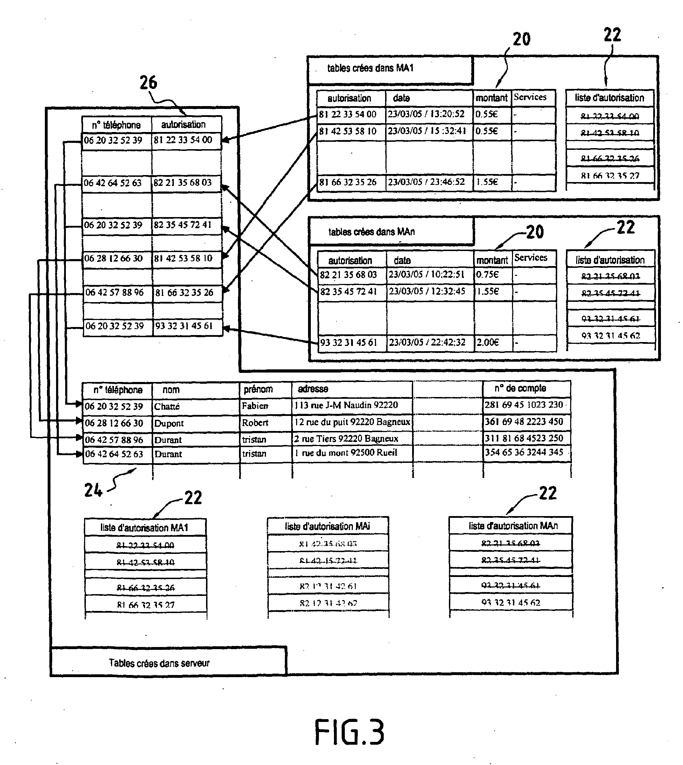

L'opération d'impression est des plus classiques et consiste pour l'utilisateur à placer le premier article de courrier qu'il souhaite affranchir dans la machine de traitement de courrier et, en suivant les instructions données par la machine, à sélectionner, au niveau de son interface utilisateur, les différentes opérations nécessaires à la mise en oeuvre du service d'affranchissement demandé comme la détermination de la destination de son courrier ou de la classe désirée (par exemple lent ou recommandé), le choix du transporteur souhaité (Chronopost ® par exemple), du logo ou de la flamme requise ainsi éventuellement que de la classe de poids lorsqu'un module de pesée n'est pas disponible. La machine de traitement de courrier va ensuite élaborer un code horodaté à partir de ces informations, notamment du montant de la transaction d'affranchissement calculé, et de son numéro d'identification, lequel code sera alors apposé (seul ou avec une empreinte postale traditionnelle) sur l'article de courrier pour en garantir la validité et le traitement ultérieur par l'administration postale. Cette opération d'affranchissement peut se répéter jusqu'à affranchissement complet des articles de courrier de l'utilisateur, celui-ci signalant lui même à la machine de traitement de courrier, via son interface utilisateur, la fin de ces opérations qui va entraîner une désactivation du module d'impression de la machine de traitement de courrier, un stockage du montant de la transaction d'affranchissement consommé et une fin de validité du code chiffré d'autorisation. A chaque code chiffré d'autorisation est donc associé le montant de la transaction d'affranchissement consommé par l'utilisateur correspondant au(x) service(s) d'affranchissement demandé(s). Ces deux éléments (code et montant) ainsi que la date de la transaction et le relevé détaillé des différentes options des services utilisés sont stockés dans la partie sécurisée de la machine de traitement de courrier dans une base de données 20 dont la structure est illustrée à la figure 3 et dont le contenu sera transféré au moins une fois par jour vers le système serveur afin de permettre la facturation de l'utilisateur (référence 122 de la figure 1). En retour, le système serveur adressera à la machine de traitement de courrier une liste 22 de codes d'autorisation valides pour les prochains affranchissements et une nouvelle clé publique nécessaire au déchiffrement de ces codes reçus chiffrés de l'utilisateur (référence 124 de la figure 1).

On notera que chaque machine de traitement de courrier en libre accès appartenant au service de paiement de service d'affranchissement comportera sa base de données propre et sa propre liste de code d'autorisation.

Le système serveur est organisé quant à lui autour de deux bases de données. Une première base de données 24 comporte des informations relatives aux différents clients du service de paiement de service d'affranchissement. Elle peut comporter par exemple les nom, prénom et adresse de chaque client, son numéro de téléphone et son numéro de compte client et toutes autres informations (par exemple le solde de son compte) permettant une parfaite identification du client. Une seconde base de données 26 comporte une table dynamique d'attribution qui affecte à chaque numéro de téléphone d'un utilisateur se connectant au service un code d'autorisation de la liste de codes d'autorisation de la machine de traitement de courrier dont il a fourni le numéro d'identification.

A partir du code d'autorisation présent dans ces deux bases de données, le système serveur peut alors effectuer un lien entre elles et donc permettre la facturation de l'utilisateur en associant un montant de la transaction d'affranchissement déterminé à un numéro de téléphone déterminé.

## Revendications

1. Procédé de paiement de service d'affranchissement dans une machine de traitement de courrier en libre accès, **caractérisé en ce qu'**il comporte les opérations suivantes :
- envoi par un utilisateur d'une requête en paiement de service d'affranchissement, comportant un envoi d'un code d'identification de la machine de traitement de courrier, vers un système serveur (14) depuis un dispositif de communication portatif (12),
- réception de cette requête par le système serveur et vérification des droits d'accès de l'utilisateur,
- si les droits d'accès de l'utilisateur sont valides, chiffrement dans le système serveur, en réponse à la requête en paiement de service d'affranchissement, d'un code d'autorisation extrait d'une liste de codes d'autorisation adressée préalablement à la machine de traitement de courrier par le système serveur,
- envoi de ce code chiffré d'autorisation vers le dispositif de communication portatif depuis le système serveur,
- lecture par l'utilisateur du code chiffré d'autorisation reçu sur le dispositif de communication portatif,
- saisie par l'utilisateur du code chiffré d'autorisation au niveau de la machine de traitement de courrier (10),
- déchiffrement par la machine de traitement de courrier du code chiffré d'autorisation entré par l'utilisateur puis comparaison du code d'autorisation déchiffré ainsi obtenu avec un code d'autorisation extrait de la liste de codes d'autorisation reçue préalablement du système serveur, et
- si ce code est valide, activation de la machine de traitement de courrier pour permettre à l'utilisateur de procéder aux opérations nécessaires à la mise en oeuvre du service d'affranchissement demandé.

2. Procédé selon la revendication 1, **caractérisé en ce qu'**il comporte en outre une opération de désactivation du code d'autorisation déchiffré une fois les opérations nécessaires à la mise en oeuvre du service d'affranchissement effectuées.

3. Procédé selon la revendication 1 ou la revendication 2, **caractérisé en ce que** l'opération d'envoi de la requête en paiement de service d'affranchissement comporte l'envoi d'un message SMS.

4. Procédé selon la revendication 1 ou la revendication 2, **caractérisé en ce que** l'opération d'envoi de la requête en paiement de service d'affranchissement comporte l'appel à un serveur vocal.

5. Procédé selon la revendication 1 ou la revendication 2, **caractérisé en ce que** l'opération de vérification des droits d'accès de l'utilisateur comporte une vérification du numéro de téléphone de l'utilisateur.

6. Procédé selon la revendication 1 ou la revendication 2, **caractérisé en ce que** l'opération de chiffrement du code d'autorisation comporte un chiffrement par une clé privée du système serveur.

7. Procédé selon la revendication 6, **caractérisé en ce que** l'opération de déchiffrement du code chiffré d'autorisation comporte un déchiffrement par une clé publique reçue préalablement du système serveur et associée à la clé privée du système serveur.

8. Procédé selon la revendication 6 ou la revendication 7, **caractérisé en ce que** la machine de traitement de courrier transmet périodiquement au système serveur une table de correspondance donnant pour chaque code d'autorisation le montant de la transaction d'affranchissement consommé par l'utilisateur de ce code.

9. Procédé selon la revendication 8, **caractérisé en ce que** cette table comporte également une date de transaction et un relevé des différentes opérations relatives au service d'affranchissement demandé.

10. Procédé selon la revendication 8, **caractérisé en ce que** cette transmission est effectuée au moins une fois par jour.

11. Procédé selon la revendication 8, **caractérisé en ce que**, en réponse à cette transmission, le système serveur retourne à la machine de traitement de courrier une nouvelle liste de codes d'autorisation et une nouvelle clé publique.

12. Procédé selon l'une quelconque des revendications 1 à 11, **caractérisé en ce que** le système serveur génère une table d'attribution qui associe au numéro de téléphone d'un utilisateur dont les droits d'accès sont valides un code d'autorisation de la liste des codes d'autorisation correspondant à la machine dont il souhaite avoir accès.

13. Procédé selon les revendications 8 et 12, **caractérisé en ce que** la facturation de l'utilisateur est effectuée en associant son numéro de téléphone issu de la table d'attribution avec un montant de la transaction d'affranchissement issu de la table de correspondance, le lien entre ces deux tables étant effectué par leur code d'autorisation commun.

## Claims

1. A method of paying for a franking service in a self-service mail-handling machine, **characterized in that** comprises the following steps:
sending by a user from a handheld communications device (12) to a server system (14) of a request for a franking service including an identity code of the mail-handling machine;
receiving of said request by the server system and verifying the user's access entitlements;
if the user's access entitlements are valid, encrypting in the server system in response to the franking service payment request of an authorization code taken from a list of authorization codes sent previously to the mail-handling machine by the server system;
· sending of the encrypted authorization code from the server system to the handheld communications device;
· reading by the user of the encrypted authorization code received on the handheld communications device;
· inputting by the user of the encrypted authorization code into the mail-handling machine (10);
· decrypting by the mail-handling machine of the encrypted authorization code inputed by the user and then comparing the resulting decrypted authorization code with an authorization code taken from the list of authorization codes previously received from the server system; and
· if said code is valid, activating the mail-handling machine so as to enable the user to proceed with the operations necessary for implementing the requested franking service.

2. A method according to claim 1, **characterized in that** it further comprises a step of desactivating the encrypted authorization code when the operation relating to the franking service have been made.

3. A method according to claim 1 or claim 2, **characterized in that** the step of sending the franking service payment request comprises sending a Short Message Service (SMS) message.

4. A method according to claim 1 or claim 2, **characterized in that** the step of sending the franking service payment request comprises making a call to a voice server.

5. A method according to claim 1, **characterized in that** the step of verifying the user's access entitlements comprises verifying the telephone number of the user.

6. A method according to claim 1, **characterized in that** the step of encrypting the authorization code comprises encryption by means of a private key of the server system.

7. A method according to claim 6, **characterized in that** the step of decrypting the encrypted authorization code comprises decryption by means of a public key previously received from the server system and associated with the private key of the server system.

8. A method according to claim 6 or claim 7, **characterized in that** the mail-handling machine periodically transmits to the server system a correspondence table which, for each authorization code, gives the franking transaction amount consumed by the user of the code.

9. A method according to claim 8, **characterized in that** said table also includes a transaction date and a statement of the various operations relating to the requested franking service.

10. A method according to claim 8, **characterized in that** the transmission takes place at least once per day.

11. A method according to claim 8, **characterized in that** in response to said transmission, the server system returns to the mail-handling machine a new list of authorization codes and a new public key.

12. A method according to any one of claims 1 to 11, **characterized in that** the server system generates an allocation table that associates the telephone number of a user whose access entitlements are valid with an authorization code from the list of authorization codes corresponding to the machine to which the user wishes to gain access.

13. A method according to claims 8 and 12, **characterized in that** the user is invoiced by associating the user telephone number from the allocation table with a franking transaction amount from the correspondence table, the link between the two tables being established by their common authorization code.

## Patentansprüche

1. Verfahren zur Bezahlung des Frankierservices bei einer frei zugänglichen Postbearbeitungsmachine, **dadurch gekennzeichnet, daß** es die folgenden Schritte umfaßt:
- Senden -durch einen Benutzer- eines Request zur Bezahlung des Frankierservices, das ein Senden eines Identifikationscodes der Postbearbeitungsmaschine zu einem Serversystem (14) von einer tragbaren Kommunikationseinrichtung (12) aus umfaßt,
- Empfangen dieses Request durch das Serversystem und Prüfen der Zugriffsrechte des Benutzers,
- wenn die Zugriffsrechte des Benutzers gültig sind, Chiffrieren in dem Serversystem, als Reaktion auf den Request zur Bezahlung des Frankierservices, eines Autorisierungscodes aus einer der Postbearbeitungsmaschine zuvor durch das Serversystem gesendeten Liste von Autorisierungscodes,
- Senden dieses chiffrierten Autorisierungscodes von dem Serversystem aus an die tragbare Kommunikationseinrichtung,
- Auslesen des auf der tragbaren Kommunikationseinrichtung empfangenen chiffrierten Autorisierungscodes durch den Benutzer,
- Erfassen des chiffrierten Autorisierungscodes durch den Benutzer im Bereich der Postbearbeitungsmaschine (10),
- Dechiffrieren des durch den Benutzer eingegebenen chiffrierten Autorisierungscodes durch die Postbearbeitungsmaschine, anschließend Vergleichen des so erhaltenen dechiffrierten Autorisierungscodes mit einem Autorisierungscode aus der zuvor von dem Serversystem empfangenen Liste von Autorisierungscodes, und
- wenn der Code gültig ist, Aktivieren der Postbearbeitungsmaschine, um dem Benutzer zu ermöglichen, die für die Durchführung des angeforderten Frankierservices erforderlichen Schritte zu vollziehen.

2. Verfahren nach Anspruch 1, **dadurch gekennzeichnet, daß** es ferner einen Schritt zum Deaktivieren des dechiffrierten Autorisierungscodes, sobald die für die Durchführung des Frankierservices erforderlichen Schritte durchgeführt sind, umfaßt.

3. Verfahren nach Anspruch 1 oder Anspruch 2, **dadurch gekennzeichnet, daß** der Schritt des Sendens des Request zur Bezahlung des Frankierservices das Senden einer SMS-Nachricht umfaßt.

4. Verfahren nach Anspruch 1 oder Anspruch 2, **dadurch gekennzeichnet, daß** der Schritt des Sendens des Request zur Bezahlung des Frankierservices den Anruf bei einem Sprachserver umfaßt.

5. Verfahren nach Anspruch 1 oder Anspruch 2, **dadurch gekennzeichnet, daß** der Schritt des Prüfens der Zugriffsrechte des Benutzers eine Überprüfung der Telefonnummer des Benutzers umfaßt.

6. Verfahren nach Anspruch 1 oder Anspruch 2, **dadurch gekennzeichnet, daß** der Schritt des Chiffrierens des Autorisierungscodes ein Chiffrieren durch einen privaten Schlüssel des Serversystems umfaßt.

7. Verfahren nach Anspruch 6, **dadurch gekennzeichnet, daß** der Schritt des Dechiffrierens des chiffrierten Autorisierungscodes ein Dechiffrieren durch einen zuvor von dem Serversystem empfangenen und dem privaten Schlüssel des Serversystems zugeordneten öffentlichen Schlüssel umfaßt.

8. Verfahren nach Anspruch 6 oder Anspruch 7, **dadurch gekennzeichnet, daß** die Postbearbeitungsmaschine dem Serversystem periodisch eine Übereinstimmungstabelle übermittelt, die für jeden Autorisierungscode den durch den Benutzer dieses Codes verbrauchten Betrag der Frankiertransaktion angibt.

9. Verfahren nach Anspruch 8, **dadurch gekennzeichnet, daß** diese Tabelle auch ein Transaktionsdatum und eine Aufstellung der verschiedenen Schritte bezüglich des angeforderten Frankierservices umfaßt.

10. Verfahren nach Anspruch 8, **dadurch gekennzeichnet, daß** diese Übermittlung wenigstens einmal pro Tag erfolgt.

11. Verfahren nach Anspruch 8, **dadurch gekennzeichnet, daß** das Serversystem - als Reaktion auf diese Übermittlung - eine neue Liste von Autorisierungscodes sowie einen neuen öffentlichen Schlüssel an die Postbearbeitungsmaschine zurücksendet.

12. Verfahren nach einem der Ansprüche 1 bis 11, **dadurch gekennzeichnet, daß** das Serversystem eine Zuweisungstabelle erzeugt, die der Telefonnummer eines Benutzers, dessen Zugriffsrechte gültig sind, einen Autorisierungscode aus der Liste der Autorisierungscodes zuordnet, welcher der Maschine entspricht, auf die er zugreifen möchte.

13. Verfahren nach den Ansprüchen 8 und 12, **dadurch gekennzeichnet, daß** die Abrechnung mit dem Benutzer **dadurch** vollzogen wird, daß seine aus der Zuweisungstabelle hervorgegangene Telefonnummer einem aus der Übereinstimmungstabelle hervorgegangenen Betrag der Frankiertransaktion zugeordnet wird, wobei die Verknüpfung zwischen diesen beiden Tabellen über ihren gemeinsamen Autorisierungscode erfolgt.
